# EUROPÄISCHE PATENTANMELDUNG

(11) **EP 4 481 517 A1**
(43) Veröffentlichungstag der Anmeldung: **25.12.2024**
(21) Anmeldenummer: 24162297.6
(22) Anmeldetag: 08.03.2024
(51) Int. Cl.: G05B 19/042

(54) **FAHRZEUGVERBAND, INSBESONDERE SCHWERLASTFAHRZEUG, UND VERFAHREN ZUM BETRIEB EINES FAHRZEUGVERBANDS**

(30) Priorität: 19.06.2023 DE 102023205694
(71) Anmelder: Scheuerle Fahrzeugfabrik GmbH, 74629 Pfedelbach (DE)
(72) Erfinder: Krasser, Marco, 74626 Bretzfeld (DE)
(74) Vertreter: Ullrich & Naumann PartG mbB

(57) **Zusammenfassung**

Fahrzeugverband, insbesondere Schwerlastfahrzeug, sowie ein Verfahren zum Betrieb eines Fahrzeugverbands mit mindestens einem Haupt-Teilverband (1) und mindestens einem Neben-Teilverband (2), wobei jeder Haupt-Teilverband (1) und jeder Neben-Teilverband (2) jeweils mindestens eine Verbandgruppe (3) aufweist, wobei jede Verbandgruppe (3) jeweils mindestens zwei miteinander gekoppelte Einheiten (4) aufweist, wobei jeder Neben-Teilverband (2) eine Sub-Master-Einheit (8) aufweist, wobei die Sub-Master-Einheit (8) dazu ausgebildet ist, Zustandsdaten (7) der Einheiten (4) des ihr zugehörigen Neben-Teilverbands (2) zu empfangen und vorzuverarbeiten, wobei jeder Haupt-Teilverband (1) eine Haupt-Master-Einheit (6) aufweist, wobei die Haupt-Master-Einheit (6) dazu ausgebildet ist, Zustandsdaten (7) der Einheiten (4) des ihr zugehörigen Haupt-Teilverbands (1) sowie die vorverarbeiteten Zustandsdaten (9) mindestens eines Neben-Teilverbands (2) zu empfangen und aus den empfangenen Zustandsdaten (7) und vorverarbeiteten Zustandsdaten (7) Steuerdaten (10) und/oder Vor-Steuerdaten zu ermitteln, wobei die Haupt-Master-Einheit (6) dazu ausgebildet ist, die ermittelten Steuerdaten (10) und/oder Vor-Steuerdaten an die Einheiten (4) des ihr zugehörigen Haupt-Teilverbands (1) und an den Neben-Teilverband (2) zu übermitteln.

## Beschreibung

Die Erfindung betrifft einen Fahrzeugverband, insbesondere Schwerlastfahrzeug.

Des Weiteren betrifft die Erfindung ein Verfahren zum Betrieb eines Fahrzeugverbands.

Aufgrund der unterschiedlichen Transportanwendungen und Einsatzgebiete kommen im Schwerlastbereich Fahrzeuge mit modularem Aufbau zum Einsatz, sogenannte Fahrzeugverbände. Die modularen Schwerlastfahrzeuge bzw. Fahrzeugverbände bestehen in der Regel aus Fahrzeugen und Antriebseinheiten, die elektrisch, hydraulisch und mechanisch miteinander gekoppelt sind. Je nach Einsatz besteht für den Transport ein unterschiedlicher Bedarf an der Anzahl von Fahrzeugen und Antriebseinheiten. Die Tendenz geht dabei zu immer größeren Transportfällen und damit zu einer immer größeren Anzahl an Fahrzeugen und Antriebseinheiten.

Um die grundlegenden Funktionalitäten wie Fahren, Bremsen, Lenken und Nivellieren über den gesamten Verband aus Fahrzeugen und Antriebseinheiten zu ermöglichen, ist jede einzelne Einheit mit Steuergeräten ausgestattet, welche miteinander kommunizieren. Mit der Anzahl der Einheiten steigt damit auch die Anzahl der Steuergeräte, welche miteinander kommunizieren. Üblicherweise gibt es eine Einheit, welche die Kontrolle über eine Funktion im Verband übernimmt. Der sogenannte Master. Dies kann dieselbe Einheit für alle Funktionen sein, muss es aber nicht. Die übrigen Einheiten stellen Informationen für den Master bereit und bekommen ihrerseits Informationen vom Master, welche sie weiterverarbeiten.

Die Steuergeräte in den Einheiten verfügen über begrenzte Ressourcen wie Speicher und Prozessorleistung. Eine größere Anzahl an Einheiten bedeutet somit einen höheren Bedarf und Austausch an Informationen und damit einhergehend einen höheren Verbrauch an Ressourcen. Bereits das Empfangen der Informationen und das Prüfen auf Gültigkeit/Richtigkeit von entsprechend vielen Einheiten kann einen einzelnen Rechner, d.h. eine einzelne Einheit, überfordern bzw. seine verfügbaren Ressourcen übersteigen. Darüber hinaus erhöht sich auch die Laufzeit der Informationen zwischen den Einheiten. Damit ist die maximale Anzahl an Einheiten und somit die Größe des Fahrzeugverbands durch die Ressourcen der Steuergeräte und der Informationslaufzeit begrenzt.

Aus diesem Grund wird in der Praxis die Anzahl der Einheiten auf eine definierte Größe begrenzt, um die Ressourcen in einem stabilen Bereich zu halten. Durch diese Begrenzung ist die Größe des Fahrzeugverbands und damit einhergehend die Transportanwendung beschränkt.

Der vorliegenden Erfindung liegt daher die Aufgabe zugrunde, einen Fahrzeugverband und ein Verfahren zum Betrieb eines Fahrzeugverbands derart auszugestalten und weiterzubilden, dass mit konstruktiv einfachen Mitteln auch bei einer großen Anzahl von miteinander gekoppelten Einheiten ein zuverlässiger Betrieb möglich ist.

Erfindungsgemäß wird die voranstehende Aufgabe in Bezug auf den Fahrzeugverband durch die Merkmale des Anspruches 1 gelöst. Damit ist ein Fahrzeugverband, insbesondere Schwerlastfahrzeug, mit mindestens einem Haupt-Teilverband und mindestens einem Neben-Teilverband angegeben, wobei jeder Haupt-Teilverband und jeder Neben-Teilverband jeweils mindestens eine Verbandgruppe aufweist, wobei jede Verbandgruppe jeweils mindestens zwei miteinander gekoppelte Einheiten aufweist,
wobei jeder Neben-Teilverband eine Sub-Master-Einheit aufweist, wobei die Sub-Master-Einheit dazu ausgebildet ist, Zustandsdaten der Einheiten des ihr zugehörigen Neben-Teilverbands zu empfangen und vorzuverarbeiten, wobei jeder Haupt-Teilverband eine Haupt-Master-Einheit aufweist, wobei die Haupt-Master-Einheit dazu ausgebildet ist, Zustandsdaten der Einheiten des ihr zugehörigen Haupt-Teilverbands sowie die vorverarbeiteten Zustandsdaten mindestens eines Neben-Teilverbands zu empfangen und aus den empfangenen Zustandsdaten und vorverarbeiteten Zustandsdaten Steuerdaten und/oder Vor-Steuerdaten zu ermitteln, wobei die Haupt-Master-Einheit dazu ausgebildet ist, die ermittelten Steuerdaten und/oder Vor-Steuerdaten an die Einheiten des ihr zugehörigen Haupt-Teilverbands und an den Neben-Teilverband zu übermitteln.

In Bezug auf das Verfahren wird die zugrundeliegende Aufgabe durch die Merkmale des Anspruchs 12 gelöst. Damit ist ein Verfahren zum Betrieb eines Fahrzeugverbands, insbesondere eines Fahrzeugverbands nach einem der Ansprüche 1 bis 11, angegeben, mit mindestens einem Haupt-Teilverband und mindestens einem Neben-Teilverband, wobei jeder Haupt-Teilverband und jeder Neben-Teilverband jeweils mindestens eine Verbandgruppe aufweist, wobei jede Verbandgruppe jeweils zwei miteinander gekoppelte Einheiten aufweist, wobei jeder Neben-Teilverband eine Sub-Master-Einheit aufweist, wobei die Sub-Master-Einheit Zustandsdaten der Einheiten des ihr zugehörigen Neben-Teilverbands empfängt und vorverarbeitet, wobei jeder Haupt-Teilverband eine Haupt-Master-Einheit aufweist, wobei die Haupt-Master-Einheit Zustandsdaten der Einheiten des ihr zugehörigen Haupt-Teilverbands sowie die vorverarbeiteten Zustandsdaten mindestens eines Neben-Teilverbands empfängt und aus den empfangenen Zustandsdaten und vorverarbeiteten Zustandsdaten Steuerdaten und/oder Vor-Steuerdaten ermittelt, wobei die Haupt-Master-Einheit die ermittelten Steuerdaten und/oder Vor-Steuerdaten an die Einheiten des ihr zugehörigen Haupt-Teilverbands und an den Neben-Teilverband übermittelt.

In erfindungsgemäßer Weise ist erkannt worden, dass die zugrundeliegende Aufgabe in verblüffend einfacher Weise gelöst werden kann, indem eine Aufteilung und Vorverarbeitung der Informationen bzw. Zustandsdaten erfolgt. Im Konkreten liegt hierzu eine Aufteilung des Fahrzeugverbands in mindestens einen Haupt-Teilverband und mindestens einen Neben-Teilverband vor, wodurch mindestens eine Haupt-Master-Einheit und mindestens eine Sub-Master-Einheit definiert sind, wobei die Haupt-Master-Einheit die von einer Sub-Master-Einheit vorverarbeiteten Zustandsdaten empfängt und weiterverarbeitet. Da die Zustandsdaten bereits von der Sub-Master-Einheit vorverarbeitet sind, verringert sich die benötigte Rechenleistung und Rechenzeit der Haupt-Master-Einheit erheblich. Auch wird die Laufzeit der Informationen bzw. Daten verringert. Somit wird durch die erfindungsgemäße Lehre ermöglicht, dass auch bei einer großen Anzahl von miteinander zu einem Fahrzeugverband gekoppelten Einheiten ein sicherer und zuverlässiger Betrieb gewährleistet ist. Insgesamt können durch die erfindungsgemäße Lehre Transporte von erheblichen Lasten und Ausmaßen durchgeführt werden, beispielsweise Schiffe, Raumfahrzeuge, Bohrinseln etc..

Im Rahmen dieser Offenbarung kann es sich bei dem "Ermitteln der Steuerdaten" beispielsweise um die Ermittlung bzw. Bestimmung von Stellgrößen oder ähnlichem handeln. Im Konkreten könnten dies ein Lenksollwert, ein minimaler und maximaler Antriebsdruck im Verband, woraus ein Pumpensollwert oder die Ansteuerung der Antriebsmotoren abgeleitet wird, und/oder ein Hub-Sollwert bzw. eine Ansteuerung der Abstützung sein. Des Weiteren kann es sich bei dem "Ermitteln der Vor-Steuerdaten" beispielsweise um die Bestimmung der Zustandsdaten des Gesamtverbandes aus den Zustandsdaten der einzelnen Einheiten handeln. Diese Zustandsdaten des Gesamtverbandes könnten dann von einer Sub-Master-Einheit zur Ermittlung der Steuerdaten für den Neben-Teilverband dienen, dem die Sub-Master-Einheit angehört.

In vorteilhafter Weise kann die Haupt-Master-Einheit dazu ausgebildet sein, die ermittelten Steuerdaten und/oder Vor-Steuerdaten an die jeweilige Sub-Master-Einheit zu übermitteln, wobei die Sub-Master-Einheit dazu ausgebildet sein kann, die ermittelten Steuerdaten an die Einheiten des ihr zugehörigen Neben-Teilverbands zu übermitteln. Bei einer solchen Ausgestaltung erfolgt die Kommunikation zwischen den Einheiten des Neben-Teilverbands und der Haupt-Master-Einheit somit mittelbar, nämlich über die Sub-Master-Einheit des jeweiligen Neben-Teilverbands. Alternativ oder zusätzlich ist es dabei denkbar, dass die Sub-Master-Einheit aus den Vor-Steuerdaten, beispielsweise Zustandsdaten des Gesamtverbands, Steuerdaten für den ihr zugehörigen Neben-Teilverband ermittelt und an die Einheiten dieses Neben-Teilverbands übermittelt.

In weiter vorteilhafter Weise kann die Haupt-Master-Einheit dazu ausgebildet sein, die ermittelten Steuerdaten an die Einheiten des jeweiligen Neben-Teilverbands zu übermitteln. Hierzu könnte die Haupt-Master-Einheit die Steuerdaten beispielsweise per Broadcasting direkt an die Einheiten des Neben-Teilverbands übertragen.

Gemäß einer vorteilhaften Weiterbildung können mehrere Haupt-Teilverbände angeordnet sein, wobei jedem Haupt-Teilverband mindestens ein Neben-Teilverband zugeordnet sein kann, mit welchem ein Datenaustausch erfolgt. Bei einer entsprechenden Ausgestaltung ist es insbesondere denkbar, dass jeweils ein Haupt-Teilverband mit einer Haupt-Master-Einheit für eine bestimmte Funktion des Fahrzeugverbands definiert ist, beispielsweise beschleunigen, bremsen, lenken und/oder nivellieren. Die Haupt-Master-Einheit empfängt dabei die Zustandsdaten bzw. vorverarbeiteten Zustandsdaten der Einheiten, die für die jeweilige Funktion relevant sind und ermittelt aus diesen Steuerdaten, die wiederum an die Einheiten mittelbar oder unmittelbar übertragen werden. Auch könnte die Haupt-Master-Einheit Vor-Steuerdaten an die jeweilige Sub-Master-Einheit zur weiteren Bearbeitung übermitteln.

In vorteilhafter Weise kann es sich bei der Einheit um eine Antriebseinheit, um ein Fahrwerk und/oder um ein Fahrwerk mit integrierter Antriebseinheit handeln. Die Fahrwerke können beispielsweise jeweils eine Ladekapazität von mehreren Tonnen, insbesondere bis zu 60 Tonnen, pro Achslinie aufweisen. Mit anderen Worten kann es sich bei den Einheiten um modulare Transportfahrzeuge, beispielsweise unter anderem um selbstangetriebene modulare Transportfahrzeuge (SPMT) sowie hierzu passende Antriebseinheiten, handeln. Die Einheiten eines erfindungsgemäßen Fahrzeugverbands können miteinander, insbesondere hydraulisch, elektrisch und/oder mechanisch, gekoppelt sein. Dabei müssen die Einheiten nicht zu einem physischen Gesamtfahrzeug mechanisch gekoppelt sein, sondern können auch zwei oder mehrere Haupt-Teilverbände und/oder Neben-Teilverbände aus jeweils mechanisch gekoppelten Einheiten bestehen, wobei die Haupt-Teilverbände und/oder Neben-Teilverbände nicht miteinander mechanisch gekoppelt sind, jedoch in ihrer Gesamtheit einen Fahrzeugverband darstellen. Im Konkreten könnte somit beispielsweise der Fahrzeugverband drei physisch voneinander unabhängige Verbände aufweisen, die jeweils miteinander mechanisch gekoppelte Einheiten aufweisen, so dass eine Last auf diesen drei Einheiten auflegbar ist. Wesentlich ist, dass es sich bei dem Fahrzeugverband um ein Schwerlastfahrzeug handelt. Alternativ oder zusätzlich kann jede Einheit eine eigene Steuereinrichtung bzw. Electronic Control Unit (ECU) aufweisen, beispielsweise ein Steuergerät oder einen Microcontroller. Es wird darauf hingewiesen, dass ein erfindungsgemäßer Fahrzeugverband neben den voranstehend genannten Einheiten auch weitere Module aufweisen kann, beispielsweise sog. spacer, die zur Verbreiterung und/oder zur Verlängerung des Fahrzeugverbands dienen.

In besonders vorteilhafter Weise kann eine Bedienungseinheit, beispielsweise eine Fernbedienung, zur Bedienung bzw. Steuerung des Fahrzeugverbands angeordnet sein. Über die Bedienungseinheit ist es einem Fahrzeugführer möglich, den Fahrzeugverband zumindest im Hinblick auf eine Funktion zu steuern, insbesondere zu beschleunigen, abzubremsen, zu lenken und/oder zu nivellieren. In weiter vorteilhafter Weise kann die Bedienungseinheit hierzu mit dem Haupt-Master des Haupt-Teilverbands kommunizieren, welcher für die jeweilige Funktion zuständig ist. Gemäß einer vorteilhaften Ausführungsform kann es sich bei den Zustandsdaten und/oder den Steuerdaten um Diagnosedaten und/oder um Funktionsdaten, insbesondere betreffend die Funktionen beschleunigen, bremsen, lenken und/oder nivellieren der Einheiten, handeln. Insbesondere kann es sich bei den Diagnosedaten um Soll- und Istzustände von Ventilen handeln, den Strom der durch ein Ventil fließt, einen Reifendruck, eine Fehlerinformation, einen Filterzustand (verschmutzt bzw. sauber), Steuerdaten an sich, d.h. ohne Rückführung, einen Sollwert z.B. für ein Licht oder eine Achsbeleuchtung, und/oder Istwerte von Drücken der einzelnen Einheiten. Alternativ oder zusätzlich ist es denkbar, dass es sich bei den Zustandsdaten um Ist-Werte einer Regelung und/oder bei den Steuerdaten um Stellgrößen einer Regelung handeln kann.

In vorteilhafter Weise kann das Vorverarbeiten der Zustandsdaten das Empfangen der Daten und/oder das Prüfen der Zustandsdaten umfassen. Insbesondere kann es sich bei dem Vorverarbeiten um das Ermitteln eines minimalen und maximalen Antriebsdrucks im Teilverband, einer maximale Lenkabweichung, eines höchsten und niedrigsten Abstützdrucks, eine Zusammenfassung von Fehlerinformationen - d.h. noch nicht bei welcher Einheit ein Fehler auftritt, jedoch welcher Fehler im Teilverband aktiv ist - und/oder einer Abweichung der Höhe bei einer Regelung der Nivellierung handeln.

Gemäß einer vorteilhaften Ausgestaltung können der Haupt-Teilverband und/oder der Neben-Teilverband mindestens vier Verbandgruppen aufweisen. Alternativ oder zusätzlich kann eine Verbandgruppe mindestens vier Einheiten aufweisen. Ein Fahrzeugverband mit einer solchen Anzahl von Verbandgruppen und Einheiten hat den Vorteil, dass auch äußerst große Transportfälle zuverlässig abgearbeitet werden können.

In vorteilhafter Weise kann die Zuteilung der Verbandgruppen zu einem Haupt-Teilverband oder einem Neben-Teilverband durch eine Steuereinrichtung einer Einheit oder durch einen Nutzer erfolgen. Mit anderen Worten kann die Aufteilung des Fahrzeugverbands in mindestens einen Haupt-Teilverband und mindestens einen Neben-Teilverband automatisch oder manuell erfolgen.

In weiter vorteilhafter Weise kann die Zuteilung der Verbandgruppen zu einem Haupt-Teilverband oder einem Neben-Teilverband unter Berücksichtigung einer Auslastung eines Speichers einer Einheit und/oder einer Auslastung einer Steuereinrichtung einer Einheit und/oder einer Anzahl der gekoppelten Einheiten erfolgen. Eine solche Ausgestaltung hat den Vorteil, dass eine - manuelle oder automatische - Aufteilung des Fahrzeugverbands dann erfolgt, wenn die Anzahl der zu dem Fahrzeugverband zusammen gekoppelten Einheiten bzw. die Steuerung/Regelung des Fahrzeugverbands derart groß ist, dass ohne eine Vorverarbeitung der Zustandsdaten eine Master-Einheit mit der Steuerung bzw. Regelung überfordert ist.

Es wird darauf hingewiesen, dass die Merkmale des erfindungsgemäßen Fahrzeugverbands auch eine verfahrensmäßige Ausprägung haben können. Eine Kombination dieser Merkmale mit den den Verfahrensanspruch betreffenden Merkmalen ist nicht nur möglich, sondern von Vorteil. Ebenso können die Merkmale zu dem erfindungsgemäßen Verfahren auch eine konstruktive Ausprägung aufweisen. Eine Kombination dieser Merkmale mit den den Fahrzeugverband betreffenden Merkmalen ist nicht nur möglich, sondern von Vorteil.

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 12 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines Fahrzeugverbands,
- Fig. 2: eine weitere Darstellung des Ausführungsbeispiels gemäß Fig. 1

In der Zeichnung sind gleiche Elemente jeweils mit den gleichen Bezugszeichen versehen, wobei zu Verbesserung der Übersichtlichkeit nicht jedes Element zwangsweise mit einem eigenen Bezugszeichen gekennzeichnet ist.

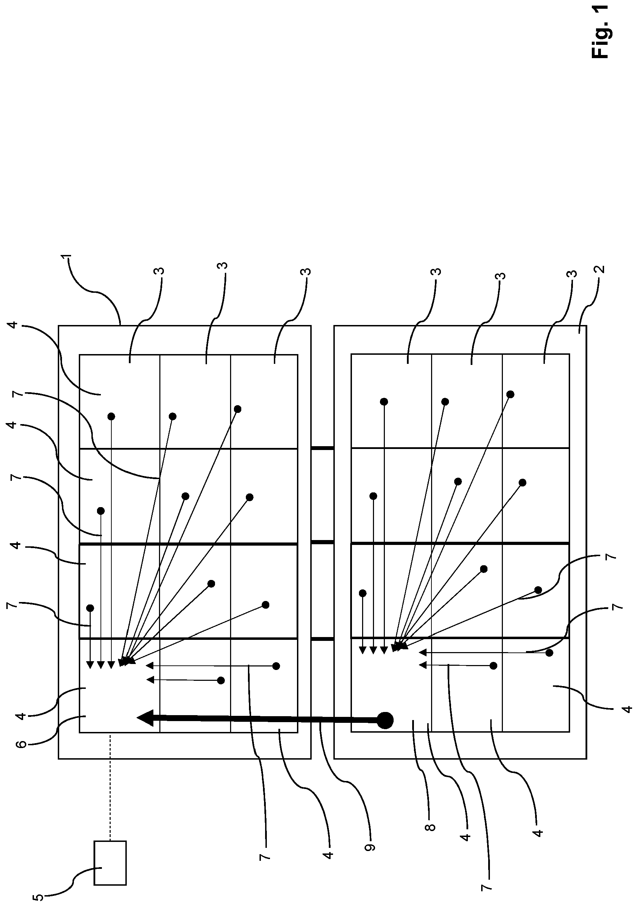

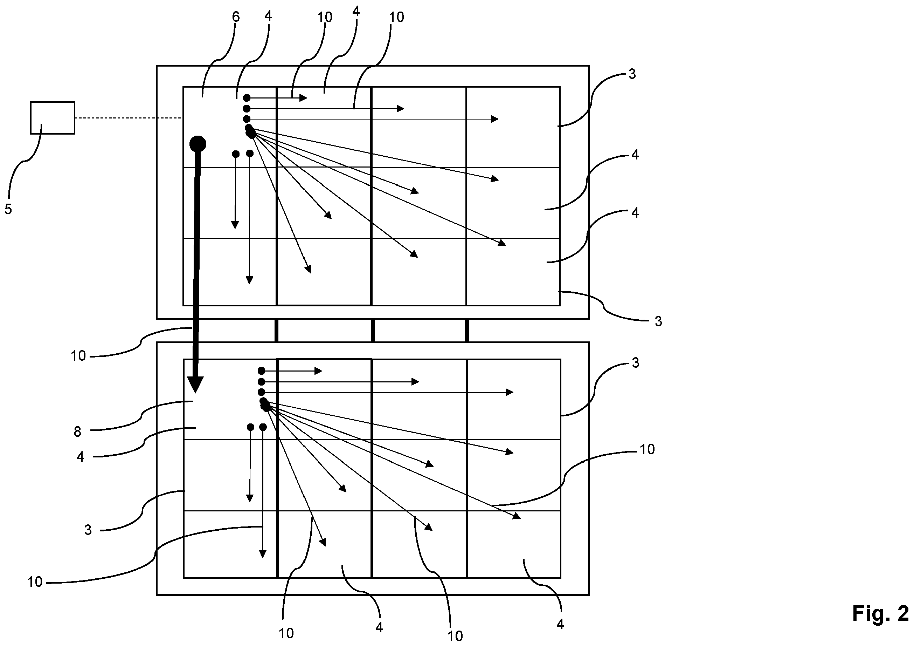

Die Figuren 1 und 2 zeigen ein Ausführungsbeispiel eines erfindungsgemäßen Fahrzeugverbands, an dem auch das erfindungsgemäße Verfahren zum Betrieb des Fahrzeugverbands erläutert wird.

Der Fahrzeugverband weist in diesem Ausführungsbeispiel einen Haupt-Teilverband 1 und einen Neben-Teilverband 2 auf, wobei auch mehr als ein Haupt-Teilverband 1 und mehr als ein Neben-Teilverband 2 vorgesehen sein können. Des Weiteren müssen der Hauptverband und der Nebenverband nicht zwangsweise mechanisch miteinander verbunden sein. Der Haupt-Teilverband 1 und der Neben-Teilverband 2 weisen jeweils drei Verbandgruppen 3 auf, die jeweils vier Einheiten 4 umfassen. Auch die Anzahl der Verbandgruppen 3 sowie der Einheiten 4 kann anders gewählt sein, insbesondere muss die Anzahl der Verbandgruppen 3 pro Haupt-Teilverband 1 bzw. pro Neben-Teilverband 2 sowie die Anzahl der Einheiten 4 pro Verbandgruppe 3 nicht jeweils identisch sein.

Die Einheiten 3 können beispielsweise als Antriebseinheiten, als Fahrwerke oder als Fahrwerke mit integrierter Antriebseinheit ausgebildet sein und sind miteinander, insbesondere hydraulisch, elektrisch und/oder mechanisch, gekoppelt. Über eine Bedienungseinheit 5, beispielweise eine Fernbedienung, kann der Fahrzeugverband von einem Fahrzeugführer bedient bzw. gesteuert werden, beispielsweise beschleunigt, gebremst, gelenkt und/oder nivelliert.

Des Weiteren ist erkennbar, dass eine der Einheiten 3 des Haupt-Teilverbands 1 als Haupt-Master-Einheit 6 realisiert ist, die Zustandsdaten 7 der Einheiten 4 des ihr zugehörigen Haupt-Teilverbands 1 empfängt. Des Weiteren ist eine der Einheiten 4 des Neben-Teilverbands 2 als Sub-Master-Einheit 8 realisiert, die Zustandsdaten 7 der Einheiten 3 des ihr zugehörigen Neben-Teilverbands 2 empfängt. Die Sub-Master-Einheit 8 dient dazu, die von ihr empfangenen Zustandsdaten 7 vorzuverarbeiten und sodann die vorverarbeiteten Zustandsdaten 9 an die Haupt-Master-Einheit 6 zu übermitteln. Die Zustandsdaten 7 können beispielsweise Ist-Werte darstellen.

Die Haupt-Master-Einheit 6 ermittelt aus den Zustandsdaten 7, beispielsweise IstWerten, der Einheiten 4 ihres Haupt-Teilverbands 1 sowie den vorverarbeiteten Zustandsdaten 9 des Neben-Teilverbands 2 Steuerdaten 10, beispielsweise Stellgrößen, und/oder Vor-Steuerdaten. Die jeweiligen Steuerdaten 10 werden von der Haupt-Master-Einheit 6 an die Einheiten 4 des Haupt-Teilverbands 1 sowie an die Sub-Master-Einheit 8 übermittelt. Die Sub-Master-Einheit 8 überträgt wiederum die Steuerdaten 10 an die einzelnen Einheiten 4 des Neben-Teilverbands 2. Dabei ist auch denkbar, dass die Haupt-Master-Einheit 6 die Steuerdaten 10 an alle Einheiten 4 des Haupt-Teilverband 1 sowie des Neben-Teilverbands 2 überträgt, beispielsweise per Broadcasting. Insgesamt kann durch die Haupt-Master-Einheit 6 beispielsweise eine Regelung des Fahrzeugverbands bzw. Funktionen des Fahrzeugverbands erfolgen. Des Weiteren ist es denkbar, dass die Sub-Master-Einheit 8 Steuerdaten 10 aus den von der Haupt-Master-Einheit 6 übermittelten Vor-Steuerdaten ermittelt und an die Einheiten 4 des ihr zugehörigen Neben-Teilverbands 2 übermittelt

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Fahrzeugverbands und des erfindungsgemäßen Verfahrens lediglich zur Erörterung der beanspruchten Lehre dienen, diese jedoch nicht auf die Ausführungsbeispiele einschränken.

### Bezugszeichenliste

- 1: Haupt-Teilverband
- 2: Neben-Teilverband
- 3: Verbandgruppe
- 4: Einheit
- 5: Bedienungseinheit
- 6: Haupt-Master-Einheit
- 7: Zustandsdaten
- 8: Sub-Master-Einheit
- 9: Zustandsdaten (vorverarbeitet)
- 10: Steuerdaten

## Patentansprüche

1. Fahrzeugverband, insbesondere Schwerlastfahrzeug, mit mindestens einem Haupt-Teilverband (1) und mindestens einem Neben-Teilverband (2),
wobei jeder Haupt-Teilverband (1) und jeder Neben-Teilverband (2) jeweils mindestens eine Verbandgruppe (3) aufweist,
wobei jede Verbandgruppe (3) jeweils mindestens zwei miteinander gekoppelte Einheiten (4) aufweist,
wobei jeder Neben-Teilverband (2) eine Sub-Master-Einheit (8) aufweist, wobei die Sub-Master-Einheit (8) dazu ausgebildet ist, Zustandsdaten (7) der Einheiten (4) des ihr zugehörigen Neben-Teilverbands (2) zu empfangen und vorzuverarbeiten, wobei jeder Haupt-Teilverband (1) eine Haupt-Master-Einheit (6) aufweist, wobei die Haupt-Master-Einheit (6) dazu ausgebildet ist, Zustandsdaten (7) der Einheiten (4) des ihr zugehörigen Haupt-Teilverbands (1) sowie die vorverarbeiteten Zustandsdaten (9) mindestens eines Neben-Teilverbands (2) zu empfangen und aus den empfangenen Zustandsdaten (7) und vorverarbeiteten Zustandsdaten (9) Steuerdaten (10) und/oder Vor-Steuerdaten zu ermitteln,
wobei die Haupt-Master-Einheit (6) dazu ausgebildet ist, die ermittelten Steuerdaten (10) und/oder Vor-Steuerdaten an die Einheiten (4) des ihr zugehörigen Haupt-Teilverbands (1) und an den Neben-Teilverband (2) zu übermitteln.

2. Fahrzeugverband nach Anspruch 1, **dadurch gekennzeichnet, dass** die Haupt-Master-Einheit (6) dazu ausgebildet ist, die ermittelten Steuerdaten (10) und/oder Vor-Steuerdaten an die jeweilige Sub-Master-Einheit (8) zu übermitteln, wobei die Sub-Master-Einheit (8) dazu ausgebildet ist, die ermittelten Steuerdaten (10) an die Einheiten (4) des ihr zugehörigen Neben-Teilverbands (2) zu übermitteln und/oder wobei die Sub-Master-Einheit (8) Steuerdaten (10) aus den Vor-Steuerdaten ermittelt und an die Einheiten (4) des ihr zugehörigen Neben-Teilverbands (2) übermittelt.

3. Fahrzeugverband nach Anspruch 1 oder 2, **dadurch gekennzeichnet, dass** die Haupt-Master-Einheit (6) dazu ausgebildet ist, die ermittelten Steuerdaten (10) an die Einheiten (4) des jeweiligen Neben-Teilverbands (2) zu übermitteln.

4. Fahrzeugverband nach einem der Ansprüche 1 bis 3, **dadurch gekennzeichnet, dass** mehrere Haupt-Teilverbände (1) angeordnet sind, wobei jedem Haupt-Teilverband (1) mindestens ein Neben-Teilverband (2) zugeordnet ist, mit welchen ein Datenaustausch erfolgt.

5. Fahrzeugverband nach einem der Ansprüche 1 bis 4, **dadurch gekennzeichnet, dass** es sich bei der Einheit (4) um eine Antriebseinheit, um ein Fahrwerk und/oder um ein Fahrwerk mit integrierter Antriebseinheit handelt.

6. Fahrzeugverband nach einem der Ansprüche 1 bis 5, **dadurch gekennzeichnet, dass** eine Bedienungseinheit (5), beispielsweise eine Fernbedienung, zur Bedienung des Fahrzeugverbands angeordnet ist.

7. Fahrzeugverband nach einem der Ansprüche 1 bis 6, **dadurch gekennzeichnet, dass** es sich bei den Zustandsdaten (7) und/oder den Steuerdaten (10) um Diagnosedaten und/oder um Funktionsdaten, insbesondere betreffend die Funktionen beschleunigen, bremsen, lenken und/oder nivellieren der Einheiten (4), handelt.

8. Fahrzeugverband nach einem der Ansprüche 1 bis 7, **dadurch gekennzeichnet, dass** es sich bei den Zustandsdaten (7) um Ist-Werte einer Regelung und/oder bei den Steuerdaten (10) um Stellgrößen einer Regelung handelt.

9. Fahrzeugverband nach einem der Ansprüche 1 bis 8, **dadurch gekennzeichnet, dass** das Vorverarbeiten der Zustandsdaten (7) das Empfangen der Daten und/oder das Prüfen der Zustandsdaten (7) umfasst.

10. Fahrzeugverband nach einem der Ansprüche 1 bis 9, **dadurch gekennzeichnet, dass** der Haupt-Teilverband (1) und/oder der Neben-Teilverband (2) mindestens vier Verbandgruppen (3) aufweist.

11. Fahrzeugverband nach einem der Ansprüche 1 bis 10, **dadurch gekennzeichnet, dass** eine Verbandgruppe (3) mindestens vier Einheiten (4) aufweist.

12. Verfahren zum Betrieb eines Fahrzeugverbands, insbesondere eines Fahrzeugverbands nach einem der Ansprüche 1 bis 11, mit mindestens einem Haupt-Teilverband (1) und mindestens einem Neben-Teilverband (2),
wobei jeder Haupt-Teilverband (1) und jeder Neben-Teilverband (2) jeweils mindestens eine Verbandgruppe (3) aufweist,
wobei jede Verbandgruppe (3) jeweils zwei miteinander gekoppelte Einheiten (4) aufweist,
wobei jeder Neben-Teilverband (2) eine Sub-Master-Einheit (8) aufweist, wobei die Sub-Master-Einheit (8) Zustandsdaten (7) der Einheiten (4) des ihr zugehörigen Neben-Teilverbands (2) empfängt und vorverarbeitet,
wobei jeder Haupt-Teilverband (1) eine Haupt-Master-Einheit (6) aufweist, wobei die Haupt-Master-Einheit (6) Zustandsdaten (7) der Einheiten (4) des ihr zugehörigen Haupt-Teilverbands (1) sowie die vorverarbeiteten Zustandsdaten (9) mindestens eines Neben-Teilverbands (2) empfängt und aus den empfangenen Zustandsdaten (7) und vorverarbeiteten Zustandsdaten (7) Steuerdaten (10) und/oder Vor-Steuerdaten ermittelt,
wobei die Haupt-Master-Einheit (6) die ermittelten Steuerdaten (10) und/oder Vor-Steuerdaten an die Einheiten (4) des ihr zugehörigen Haupt-Teilverbands (1) und an den Neben-Teilverband (2) übermittelt.

13. Verfahren nach Anspruch 12, **dadurch gekennzeichnet, dass** die Zuteilung der Verbandgruppen (3) zu einem Haupt-Teilverband (1) oder einem Neben-Teilverband (2) durch eine Steuereinrichtung einer Einheit (4) oder durch einen Nutzer erfolgt.

14. Verfahren nach Anspruch 12 oder 13, **dadurch gekennzeichnet, dass** die Zuteilung der Verbandgruppen (3) zu einem Haupt-Teilverband (1) oder einem Neben-Teilverband (2) unter Berücksichtigung einer Auslastung eines Speichers einer Einheit (4) und/oder einer Auslastung einer Steuereinrichtung einer Einheit (4) und/oder einer Anzahl der gekoppelten Einheiten (4) erfolgt.

## Geänderte Patentansprüche

### Geänderte Patentansprüche gemäss Regel 137(2) EPÜ.

1. Fahrzeugverband, insbesondere Schwerlastfahrzeug, mit mindestens einem Haupt-Teilverband (1) und mindestens einem Neben-Teilverband (2),
wobei jeder Haupt-Teilverband (1) und jeder Neben-Teilverband (2) jeweils mindestens eine Verbandgruppe (3) aufweist,
wobei jede Verbandgruppe (3) jeweils mindestens zwei miteinander gekoppelte Einheiten (4) aufweist, wobei es sich bei der Einheit (4) um eine Antriebseinheit, um ein Fahrwerk und/oder um ein Fahrwerk mit integrierter Antriebseinheit handelt, wobei jeder Neben-Teilverband (2) eine Sub-Master-Einheit (8) aufweist, wobei die Sub-Master-Einheit (8) dazu ausgebildet ist, Zustandsdaten (7) der Einheiten (4) des ihr zugehörigen Neben-Teilverbands (2) zu empfangen und vorzuverarbeiten, wobei jeder Haupt-Teilverband (1) eine Haupt-Master-Einheit (6) aufweist, wobei die Haupt-Master-Einheit (6) dazu ausgebildet ist, Zustandsdaten (7) der Einheiten (4) des ihr zugehörigen Haupt-Teilverbands (1) sowie die vorverarbeiteten Zustandsdaten (9) mindestens eines Neben-Teilverbands (2) zu empfangen und aus den empfangenen Zustandsdaten (7) und vorverarbeiteten Zustandsdaten (9) Steuerdaten (10) und/oder Vor-Steuerdaten zu ermitteln,
wobei die Haupt-Master-Einheit (6) dazu ausgebildet ist, die ermittelten Steuerdaten (10) und/oder Vor-Steuerdaten an die Einheiten (4) des ihr zugehörigen Haupt-Teilverbands (1) und an den Neben-Teilverband (2) zu übermitteln.

2. Fahrzeugverband nach Anspruch 1, **dadurch gekennzeichnet, dass** die Haupt-Master-Einheit (6) dazu ausgebildet ist, die ermittelten Steuerdaten (10) und/oder Vor-Steuerdaten an die jeweilige Sub-Master-Einheit (8) zu übermitteln, wobei die Sub-Master-Einheit (8) dazu ausgebildet ist, die ermittelten Steuerdaten (10) an die Einheiten (4) des ihr zugehörigen Neben-Teilverbands (2) zu übermitteln und/oder wobei die Sub-Master-Einheit (8) Steuerdaten (10) aus den Vor-Steuerdaten ermittelt und an die Einheiten (4) des ihr zugehörigen Neben-Teilverbands (2) übermittelt.

3. Fahrzeugverband nach Anspruch 1 oder 2, **dadurch gekennzeichnet, dass** die Haupt-Master-Einheit (6) dazu ausgebildet ist, die ermittelten Steuerdaten (10) an die Einheiten (4) des jeweiligen Neben-Teilverbands (2) zu übermitteln.

4. Fahrzeugverband nach einem der Ansprüche 1 bis 3, **dadurch gekennzeichnet, dass** mehrere Haupt-Teilverbände (1) angeordnet sind, wobei jedem Haupt-Teilverband (1) mindestens ein Neben-Teilverband (2) zugeordnet ist, mit welchen ein Datenaustausch erfolgt.

5. Fahrzeugverband nach einem der Ansprüche 1 bis 4, **dadurch gekennzeichnet, dass** eine Bedienungseinheit (5), beispielsweise eine Fernbedienung, zur Bedienung des Fahrzeugverbands angeordnet ist.

6. Fahrzeugverband nach einem der Ansprüche 1 bis 5, **dadurch gekennzeichnet, dass** es sich bei den Zustandsdaten (7) und/oder den Steuerdaten (10) um Diagnosedaten und/oder um Funktionsdaten, insbesondere betreffend die Funktionen beschleunigen, bremsen, lenken und/oder nivellieren der Einheiten (4), handelt.

7. Fahrzeugverband nach einem der Ansprüche 1 bis 6, **dadurch gekennzeichnet, dass** es sich bei den Zustandsdaten (7) um Ist-Werte einer Regelung und/oder bei den Steuerdaten (10) um Stellgrößen einer Regelung handelt.

8. Fahrzeugverband nach einem der Ansprüche 1 bis 7, **dadurch gekennzeichnet, dass** das Vorverarbeiten der Zustandsdaten (7) das Empfangen der Daten und/oder das Prüfen der Zustandsdaten (7) umfasst.

9. Fahrzeugverband nach einem der Ansprüche 1 bis 8, **dadurch gekennzeichnet, dass** der Haupt-Teilverband (1) und/oder der Neben-Teilverband (2) mindestens vier Verbandgruppen (3) aufweist.

10. Fahrzeugverband nach einem der Ansprüche 1 bis 9, **dadurch gekennzeichnet, dass** eine Verbandgruppe (3) mindestens vier Einheiten (4) aufweist.

11. Verfahren zum Betrieb eines Fahrzeugverbands, insbesondere eines Fahrzeugverbands nach einem der Ansprüche 1 bis 10, mit mindestens einem Haupt-Teilverband (1) und mindestens einem Neben-Teilverband (2),
wobei jeder Haupt-Teilverband (1) und jeder Neben-Teilverband (2) jeweils mindestens eine Verbandgruppe (3) aufweist,
wobei jede Verbandgruppe (3) jeweils zwei miteinander gekoppelte Einheiten (4) aufweist, wobei es sich bei der Einheit (4) um eine Antriebseinheit, um ein Fahrwerk und/oder um ein Fahrwerk mit integrierter Antriebseinheit handelt,
wobei jeder Neben-Teilverband (2) eine Sub-Master-Einheit (8) aufweist, wobei die Sub-Master-Einheit (8) Zustandsdaten (7) der Einheiten (4) des ihr zugehörigen Neben-Teilverbands (2) empfängt und vorverarbeitet,
wobei jeder Haupt-Teilverband (1) eine Haupt-Master-Einheit (6) aufweist, wobei die Haupt-Master-Einheit (6) Zustandsdaten (7) der Einheiten (4) des ihr zugehörigen Haupt-Teilverbands (1) sowie die vorverarbeiteten Zustandsdaten (9) mindestens eines Neben-Teilverbands (2) empfängt und aus den empfangenen Zustandsdaten (7) und vorverarbeiteten Zustandsdaten (7) Steuerdaten (10) und/oder Vor-Steuerdaten ermittelt,
wobei die Haupt-Master-Einheit (6) die ermittelten Steuerdaten (10) und/oder Vor-Steuerdaten an die Einheiten (4) des ihr zugehörigen Haupt-Teilverbands (1) und an den Neben-Teilverband (2) übermittelt.

12. Verfahren nach Anspruch 11, **dadurch gekennzeichnet, dass** die Zuteilung der Verbandgruppen (3) zu einem Haupt-Teilverband (1) oder einem Neben-Teilverband (2) durch eine Steuereinrichtung einer Einheit (4) oder durch einen Nutzer erfolgt.

13. Verfahren nach Anspruch 11 oder 12, **dadurch gekennzeichnet, dass** die Zuteilung der Verbandgruppen (3) zu einem Haupt-Teilverband (1) oder einem Neben-Teilverband (2) unter Berücksichtigung einer Auslastung eines Speichers einer Einheit (4) und/oder einer Auslastung einer Steuereinrichtung einer Einheit (4) und/oder einer Anzahl der gekoppelten Einheiten (4) erfolgt.
